# EUROPÄISCHE PATENTSCHRIFT

(11) **EP 0 566 033 B1**
(45) Veröffentlichungstag und Bekanntmachung des Hinweises auf die Patenterteilung: **15.10.1997**
(21) Anmeldenummer: 93105835.8
(22) Anmeldetag: 08.04.1993
(51) Int. Cl.: A01D 34/66, A01B 59/048

(54) **Tragrahmen mit landwirtschaftlicher Erntemaschine, insbesondere Rotationsmähwerk**
Supporting frame for agricultural harvesting machine, particularly circular mower
Cadre support pour machine de récolte, en particulier faucheuse rotative

(30) Priorität: 14.04.1992 DE 4212417
(43) Veröffentlichungstag der Anmeldung: 20.10.1993
(73) Patentinhaber: Alois Pöttinger Maschinenfabrik GmbH, A-4710 Grieskirchen (AT)
(72) Erfinder: Leposa, Wolfgang, A-4710 Grieskirchen (AT); Kagerer, Ingo, Dipl.-Ing., A-4600 Wels (AT)
(74) Vertreter: Dupal, Helmut, Dipl-Ing.

(56) Entgegenhaltungen:
- EP-A- 0 382 666
- EP-A- 0 394 830
- EP-A- 0 400 285
- EP-A- 0 456 900
- DE-A- 3 322 030
- DE-A- 4 007 735
- DE-U- 8 701 093
- DE-U- 9 016 081
- FR-A- 2 086 286
- GB-A- 2 052 237

## Beschreibung

Die Erfindung bezieht sich auf eine landwirtschaftliche Erntemaschine, insbesondere Rotationsmähwerk, mit einem Tragrahmen für den Anbau an das Dreipunkthubwerk eines Schleppers, mit den Merkmalen des Gattungsbegriffes des Anspruches 1 (siehe FR-A-2 086 286).

Tragrahmen dieser Art werden zumeist für Mähwerke verwendet, die den Bodenunebenheiten möglichst trägheitslos folgen sollen, um keine ungemähten Stellen zu hinterlassen und um keine Störungen durch Beschädigen oder Abtragen der Grasnabe oder durch Einrammen des Mähwerkes in den Boden zu verursachen. Es ist dabei wichtig, daß der Maschinenrahmen nicht nur Auf-und Abbewegungen ausführen, sondern dabei auch erhebliche Schräglagen in Querrichtung einnehmen kann.

Aus der DE-OS 33 22 030 ist ein Tragrahmen für ein Frontmähwerk mit Mähtrommeln zum Anbau an das Dreipunkthubwerk eines Schleppers bekannt geworden, bei dem der Mähwerksrahmen an einem Tragrahmen um eine waagrechte Achse mittig pendelnd angehängt ist und mit beidseitig davon angeordneten Elementen, die aus Federn bestehen, zur Begrenzung der Schwingungsweite, ausgestattet ist.

Die Höhenbewegung selbst erfolgt über die Schwimmstellung des Dreipunkthubwerkes parallel, in waagrechter Lage der Mähteller.

Diese Anordnung weist keine Verstellmöglichkeit zur Einrichtung des Mähwerkrahmens in seiner Lage zum Boden auf.

Aus dem DE-GM 67 50 238 ist ein an einem Schlepper aufgebauter Fronttragrahmen für ein Rotationsmähwerk mit Mähtrommeln zu entnehmen, bei dem der Mähwerksrahmen ebenfalls um eine waagrechte Achse, die mittig angeordnet ist, pendeln kann, bei dem aber zusätzlich ein Zwischenrahmen in Form eines Querbalkens vorgesehen ist, der seinerseits um eine waagrechte Achse verstellbar, an zwei Frontladeschwingen angelenkt ist und gleichzeitig über zwei Verstellspindeln, die zwischen dem Zwischenrahmen und den Frontladeschwingen angelenkt sind, in denen die aufrechte Lage eingestellbar ist, in der die Mähteller waagrecht auf dem Boden aufliegen.

Nachteilig bei dieser Anordnung ist das Fehlen eines Dreipunkthubwerkes, das die parallele Höhenbewegung des Mähwerkrahmens sicherstellt, sowie die Ausrichtung der Verstellspindeln, die bei seitlichen Schwenkbewegungen zur Bodenanpassung das Mähwerk in ungünstige Lagen zum Boden bringen können, wodurch Störungen oder Schäden entstehen können, weil die Mähteller dann in bestimmten Lagen in den Boden stechen oder die Grasnabe stellenweise abtragen können.

Der zusätzliche Zwischenrahmen verteuert die Anordnung und kompliziert deren Aufbau.

Aufgabe der Erfindung ist es, einen Fronttragrahmen einer landwirtschaftlichen Erntemaschine zum Anbau an das Dreipunkthubwerk eines Schleppers zu schaffen, der für die Verwendung eines Rotationsmähwerkes, insbesonders mit Mähtrommeln, geeignet ist, wobei die Aufhängung des Maschinenrahmens des Mähwerks so zu gestalten ist, daß dieser Höhenbewegungen ausführen und Schräglagen quer zur Fahrtrichtung einnehmen kann, ohne dadurch zu Störungen oder sogar Beschädigungen von Maschine oder Grasnabe Anlaß zu geben.

Diese Aufgabe wird bei einer Maschine des Gattungsbegriffes von Anspruch 1 mit den Merkmalen des kennzeichnenden Teiles gelöst.

Die Unteransprüche betreffen besonders vorteilhafte Ausgestaltungen der Erfindung.

Durch die Anwendung von Seitenlenkern, sowie der mittigen Aufhängung mit Kugelgelenken, wird ein weiter Bereich von seitlichen Ausgleichsbewegungen als Folge der Bodenanpassung ermöglicht. Die Abstützung der Seitenlenker über einen längenveränderlichen Energiespeicher und besonders die mittige Abstützung an der Tragkonsole im Bereich des mittleren Kugelgelenkes, an dem die Erntemaschine aufgehängt ist, dämpft erst seitliche Verschwenkungen des Maschinenrahmens und die dabei auftretenden Schwingungen wirksam, ohne daß dadurch auf eine nennenswerte Gewichtsentlastung der Erntemaschine verzichtet werden müßte, dies deshalb, weil die Welle und die mit ihr verbundenen Anschläge als Querstabilisierung der Erntemaschine wirken.

Die Anordnung der Anschläge ermöglicht eine besonders einfache Herstellung einer gedämpft gefederten Stabilisierung der Erntemaschine, auch für starke Querneigungen, unter Abstimmung der auftretenden Momente.

Zur Vermeidung von Schäden oder Lärm ist die Anwendung von Gummipuffern sehr vorteilhaft. Durch eine Druckfeder als längenveränderlicher Energiespeicher, zwischen dem Kurbelarm der Welle und der Konsole in Längsrichtung des Tragrahmens, ergibt sich ein genügender Raum für den Einbau, wobei die Einstellbarkeit der Federvorspannung für die Anwendung bei Erntemaschinen unterschiedlichen Gewichts von Bedeutung ist. Eine ebenfalls sehr vorteilhafte Ausgestaltung der Erfindung bildet die Anwendung eines hydraulischen Kraftzylinders mit angeschlossenem Druckspeicher.

Die Anlenkung des Tragrahmens über einen Tragarm mit Tragkonsole an dem Maschinenrahmen über Kugelgelenke ermöglicht eine ausgewogene Pendelbewegung des Maschinenrahmens durch die mittige Anlenkung, wobei die Anwendung einer mittigen Lagerungskonsole unmittelbar am Maschinenrahmen die Wahl einer geeigneten, günstigen Lenkergeometrie für das Hochheben des Maschinenrahmens erlaubt, die den Verlauf der Ausweichbewegungen an Bodenunebenheiten bestimmt.

Ein besonders einfacher und stabiler Aufbau wird erreicht, wenn die Lagerungskonsole für das mittige Gelenk gleichzeitig als Halterung für ein vorteilhafterweise oberhalb des Maschinenrahmens angebrachtes Eingangsgetriebe ausgebildet ist und zusammen mit einem Zwischengetriebe den Antriebsstrang für die Erntemaschine oberhalb des Maschinenrahmens bildet.

Besonders vorteilhaft ist es dabei, wenn die Anlenkung des mittigen Kugelgelenkes des Hauptlenkers sehr tief an dem Maschinenrahmen angeordnet ist, weil dadurch bei pendelnden Schwenkbewegungen die Bearbeitungswerkzeuge vorne angehoben werden, wenn die Anlenkung der Verstellglieder entsprechend gewählt ist .

Eine besonders einfache Gestaltung erhält man durch die Anwendung von hochgezogenen Auslegern, welche die geeignete Ausrichtung der Verstellglieder, die vorteilhaft aus Schraubspindeln bestehen, ermöglichen.

Die bevorzugte Anordnung der maschinenseitigen Gelenke der Seitenlenker zwischen hochgezogenen Auslegern, an der dem mittigen Gelenk gegenüberliegenden Seite des Maschinenrahmens, ergibt zusammen mit einem tiefliegenden mittigen Gelenk eine günstige Lage der Arbeitswerkzeuge bei Ausgleichsbewegungen an Bodenunebenheiten, die den Maschinenrahmen seitlich anheben oder absenken lassen.

Beim einfachen Hochheben des Maschinenrahmens werden durch die Anschläge und deren bevorzugte Dämpfung überschwingende Bewegungen verhindert, so daß auch beim Straßentransport kein Pendeln auftritt.

Bei der Höhenbewegung des Maschinenrahmens wirkt die Dreipunktanhängung des Schleppers, mit ihrer Hydraulik in Schwimmstellung geschaltet mit, wobei deren untere Lenker mit Federn entlastet werden können um, z.B. bei Mähwerken bei den Mähwerkstellern, den Auflagedruck zu verringern, was wiederum die Bodenanpassung verbessert.

Die Anmeldung wird an Hand der Zeichnung eines Ausführungsbeispieles beschrieben.

Es zeigt :

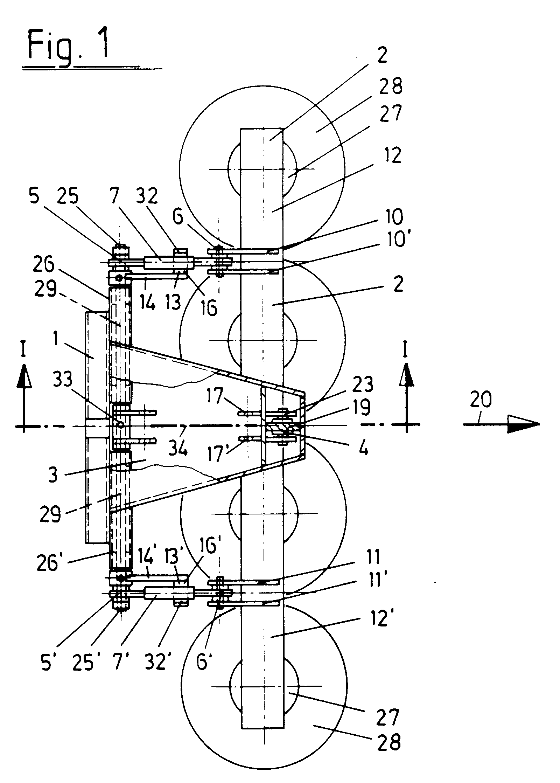

- Fig. 1: eine erfindungsgemäße Maschinenanordnung in Draufsicht,
- Fig. 2: Schnitt I-I in Fig. 1

Der Tragrahmen 1 besteht aus einem Anbaubock 21 mit den Anschlüssen für die beiden Unterlenker 22,22' des Dreipunkthydraulikanschlußes eines Schleppers, der auf der gegenüberliegenden Seite mit einem Tragarm 3 versehen ist, der in Fahrtrichtung 20 oberhalb der Bearbeitungsmaschine, einem Rotationsmähwerk, angeordnet ist und an dessen Ende eine Tragkonsole 19 nach unten gerichtet ist und ein mittiges Gelenk 4 trägt, das als Kugelgelenk ausgebildet ist, das zwischen zwei Wangen einer am Mähwerksrahmen 2 befestigten Lagerkonsole 23 gelagert ist, die verlängert ist und gleichzeitig einem Eingangsgetriebe 24 als Halterung dient, so daß das mittige Gelenk 4 dadurch unmittelbar am Mähwerksrahmen 2 auf der Seite, die der Fahrtrichtung 20 zugewandt ist liegt.

An der gegenüberliegenden Seite des Mähwerkrahmens 2, die dem Tragrahmen 1 zugewandt ist, sind in den Seitenbereichen 12,12' des Mähwerkrahmens zwei Ausleger 10,10' und 11,11' hochgezogen, die paarweise ausgebildet sind und zwischen denen die mähwerkrahmenseitigen, als Kugelgelenke 6,6' ausgebildeten Gelenke der Seitenlenker 7,7' gelagert sind.

Die tragarmseitigen, ebenfalls als Kugelgelenke ausgebildeten Gelenke 5,5' der Seitenlenker 7,7' sind an Zapfen 25,25' einer durchgehenden, in zwei Querträgern 26,26' gelagerten Welle 29, die ihrerseits quer zur Fahrtrichtung 20 verläuft angelenkt.
Die beiden Querträger 26,26' sind am Tragrahmen 1 befestigt und mittig voneinander beabstandet.

Im Bereich zwischen den beiden Querträgern 26,26' ist an der Welle 29 ein Kurbelarm 33 verdrehfest angebracht. Zwischen dem Kurbelarm 33 als Widerlager 35 und einem zweiten Widerlager 35,35' ist ein längenveränderlicher Energiespeicher 34 in Form einer Druckfeder eingesetzt, wobei eine Federspindel 37 am Kurbelarm 33 mit einem Lagerbolzen 40 und im vorderen Bereich 36 der Tragkonsole 19 des Tragrahmens 1, mit einem Lagerauge 15 und einem Bolzen 16 zwischen zwei Lagerträger 17,17' abgestützt zur Führung gelagert ist.

Die Federspindel 37 trägt Federteller 18,18', zwischen denen die Druckfeder eingespannt gehalten und deren Abstand mittels einer Spindelmutter 38 eingestellt werden kann, wodurch die Grundstellung 8 der Welle 29 und die Federvorspannung eingestellt werden kann.

An der Welle 29 sind beiderseits Anschlagarme 14,14' verdrehfest angebracht, an deren Enden Anschläge 13,13' vorgesehen sind, die mit Dämpfungselementen 32,32' für die Seitenlenker 7,7' ausgestattet und unterhalb der Seitenlenker 7,7' angeordnet sind.

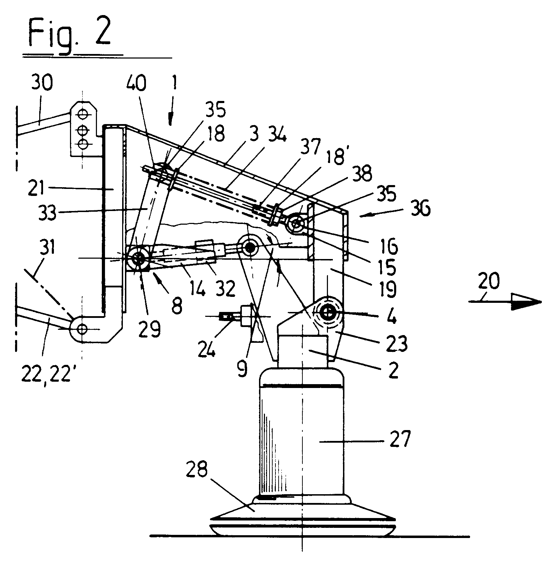

In der Grundstellung 8 der Welle 29 liegen die Seitenlenker 7,7' auf den Anschlägen 16,16' und nehmen dabei einen zur Waagrechten nach oben verlaufenden sich öffnenden Winkel 9 ein, wenn die Mähteller 28 des Mähwerkes waagrecht auf dem Boden gerade noch aufliegen, wobei die mähwerkrahmenseitigen Gelenke 6,6' in Bezug zur Waagrechten höher angeordnet sind als die tragarmseitigen Gelenke 5,5' (Fig.2).

Dadurch wird erreicht, daß bei seitlichen Pendelbewegungen des Mähwerkrahmens 2 die Mähtrommeln 27 und die Mähteller 28 beim Anheben in Fahrtrichtung 20 vorne nach oben angestellt werden und das Einrammen in den Boden vermieden wird, wodurch die Bodenanpassung bei Bodenunebenheiten in hohem Maße erreicht wird.

Bei Bodenerhebungen oder Vertiefungen wird das Mähwerk insgesamt angehoben oder abgesenkt, indem der Tragrahmen 1 über die Unterlenker 22,22' und den Oberlenker 30 mittels der Dreipunkthydraulik, die in Arbeitsstellung in Schwimmstellung geschaltet ist, betätigt wird, wobei zur Verringerung des Auflagedruckes, zwecks Verbesserung der Bodenanpassung des Mähwerkes, eine Federentlastung 31 vorgesehen ist, die in Fig.2 angedeutet, im Bereich der Dreipunkthydraulik vorgesehen ist.

Sinkt ein Seitenbereich 12 oder 12' des Mähwerkrahmens 2 infolge einer Bodenunebenheit nach unten, so wird der gegenüberliegende Seitenbereich 12 oder 12' gleichzeitig angehoben oder umgekehrt, wobei der nach unten gehende Seitenlenker 7 oder 7' den zugeordneten Anschlagarm 14 oder 14' mitnimmt, wodurch über den Kurbelarm 33, die Druckfeder d.h. der längenveränderliche Energiespeicher 34 zusammengedrückt wird und anderseits speichert dieser die Energie, die er nach überwinden des Bodenhindernisses wieder an den Kurbelarm 33 und die Welle 29 übergibt, die dadurch die nach unten gehende Bewegung des anderen Seitenbereiches 12' oder 12 des Mähwerkarmes 2 über den anderen Seitenlenker 7' oder 7 auffängt und damit Schwingungsbewegungen außerordentlich schnell und wirksam dämpft.

Während der Straßenfahrt führt das Mähwerk nur sehr geringe, stark gedämpfte Pendelbewegungen aus, weil die Seitenlenker 7,7' auf den Anschlagrahmen 14,14' aufliegen, während die Lenker der Dreipunkthydraulik das Mähwerk ausgehoben halten.

### Legende :

- 1: Tragrahmen
- 2: Maschinenrahmen
- 3: Tragarm des Tragrahmens 1
- 4: mittiges Gelenk des Tragarmes 3
- 5,5': tragrahmenseitige Gelenke der Seitenlenker 7,7'
- 6,6': maschinenrahmenseitige Gelenke der Seitenlenker 7,7'
- 7,7': Seitenlenker
- 8: Grundstellung der Seitenlenker 7,7'
- 9: zur Waagrechten nach oben verlaufender Winkel der Seitenlenker 7,7' in Grundstellung 8
- 10,10': rechte Ausleger des Maschinenrahmens 2
- 11,11': linke Ausleger des Maschinenrahmens 2
- 12,12': Seitenbereiche des Maschinenrahmens 2
- 13,13': Anschläge für die Seitenlenker 7,7'
- 14,14': Anschlagarme mit den Anschlägen 13,13'
- 15: Lagerauge der Federspindel 37
- 16: Bolzen
- 17,17': Lagerträger
- 18,18': Federteller
- 19: Tragkonsole des Tragarmes 3
- 20: Fahrtrichtung
- 21: Anbaubock
- 22,22': Unterlenker des Dreipunktanschlusses eines Schleppers
- 23: Lagerkonsole
- 24: Eingangsgetriebe
- 25,25': Zapfen des Querträgers 26
- 26,26': Querträger des Tragrahmens 1
- 27: Mähtrommeln
- 28: Mähteller
- 29: Welle
- 30: Oberlenker der Dreipunkthydraulik
- 31: Federentlastung der Dreipunkthydraulik
- 32,32': Dämpfungselemente der Anschläge 13,13'
- 33: Kurbelarm der Welle 29
- 34: längenveränderlicher Energiespeicher
- 35,35': Widerlager des längenveränderlichen Energiespeichers 34
- 36: vorderer Bereich der Tragkonsole 19
- 37: Federspindel
- 38: Spindelmutter
- 39:
- 40: Lagerbolzen

## Patentansprüche

1. Landwirtschaftliche Erntemaschine, insbesondere Rotationsmähwerk, mit einem Tragrahmen zum Anbau an das Frontdreipunkthubwerk eines Schleppers, mit einem in Bezug auf den Maschinenrahmen mittig angeordneten Tragarm, an dem der Maschinenrahmen mit einem Gelenk seitlich pendelbar aufgehängt und mit zwei seitlich davon am Maschinenrahmen und am Tragrahmen mit Gelenken angebrachten Seitenlenkern gehalten ist, wobei sowohl das mittige Gelenk (4) zwischen dem Tragarm (3) des Tragrahmens (1) und dem Maschinenrahmen (2), als auch die tragrahmenseitigen Gelenke (5,5') und die maschinenrahmenseitigen Gelenke (6,6') der beiden Seitenlenker (7,7') als Kugelgelenke ausgebildet sind, dadurch gekennzeichnet, daß die maschinenrahmenseitigen Gelenke (6,6') in Arbeitsstellung der Erntemaschine, in Bezug auf die Waagrechte, höher liegen als die tragrahmenseitigen Gelenke (5,5') der Seitenlenker (7,7'), wobei die tragrahmenseitigen Gelenke (5,5') an einer diese verbindenden Welle (29) gelagert sind, die mit einem verdrehfesten angebrachten Kurbelarm (33) über einen längenveränderlichen Energiespeicher (34) gegen den mittigen Tragarm (3) des Tragrahmens (1) abgestützt ist, während die beiden Seitenlenker (7,7') in ihrem Bewegungsweg nach unten von Anschlägen (13,13') begrenzt sind, die mit der Welle (29) verdrehfest verbunden sind.

2. Erntemaschine nach Anspruch 1, dadurch gekennzeichnet, daß an der Welle (29) beiderseits unter den Seitenlenkern die Anschläge (13,13') an Anschlagsarmen (14,14') befestigt, angeordnet sind.

3. Erntemaschine nach Anspruch 2, dadurch gekennzeichnet, daß die Anschlagarme (14,14 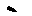 ) in ihrer Lage zu den Seitenlenkern (7,7') einstellbar sind, vorzugsweise durch Verstellung des Kurbelarmes (33) zur Welle (29) oder durch Verlagerung des Energiespeichers (34) in Bezug auf den Kurbelarm (33) oder durch Verstellung der Anschlagarme (14, 14') gegenüber der Welle (29).

4. Erntemaschine nach einem der Ansprüche 1 bis 4, dadurch gekennzeichnet , daß die Anschlagstellen der Seitenlenker (7,7 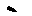 ) an den Anschlägen (13,13') mit Dämpfungselementen (32,32') versehen sind.

5. Erntemaschine nach einem der Ansprüche 1 bis 3, dadurch gekennzeichnet, daß der längenveränderliche Energiespeicher (34) aus einer Druckfeder besteht, die zwischen Widerlagern (35,35') am Kurbelarm (33) und im vorderen Bereich (36) des Tragarmes (3) eingespannt ist und deren Vorspannung zur Einstellung der Bodenanpassung der Erntemaschine einer Federspindel (37) mit einer Spindelmutter (38) einstellbar ist.

6. Erntemaschine nach einem der Ansprüche 1,3 oder 5, dadurch gekennzeichnet, daß der längenveränderliche Energiespeicher (34) aus einem hydraulischen Kraftzylinder mit angeschlossenem Druckspeicher besteht, der aufgeladen wird, wenn der Kraftzylinder zusammen gedrückt wird.

7. Erntemaschine nach Anspruch 1, dadurch gekennzeichnet, daß der Tragarm (3) des Tragrahmens (1) nach vorne verläuft und mit einer nach unten gerichteten Tragkonsole (19) in Höhe des Maschinenrahmens (2) endet, die das mittige Kugelgelenk (4) trägt, das an dem Maschinenrahmen (2) über eine an diesem befestigte Lagerkonsole (23) angelenkt ist.

8. Erntemaschine nach Anspruch 1, dadurch gekennzeichnet, daß die beiden maschinenrahmenseitigen Gelenke (6,6') der Seitenlenker (7,7') zwischen nach oben gezogenen, an der von der Fahrtrichtung (20) abgewandten Seite des Maschinenrahmens (2) befestigten Auslegern (10,10' und 11,11') des Maschinenrahmens (2) gelagert sind, die in den Seitenbereichen (12,12') des Maschinenrahmens (2) an diesem befestigt sind.

9. Erntemaschine nach dem vorhergehenden Anspruch, dadurch gekennzeichnet, daß die Lagerkonsole (23) für das mittige Gelenk (4) gleichzeitig als Halterung für ein Eingangsgetriebe (24) verlängert ausgebildet ist.

## Claims

1. Harvesting machine, specially rotating mower, with a trestle (1) adjusted for attachement at the three-point linkage of a tractor, said trestle (1) being fitted with a supporting girder (3) arranged in respect to the machine-frame (2) in the middle thereof and at this machine-frame (2) being suspended laterally oscillating by a joint said supporting girder (3) and being supported by two lateral arranged guiding-rods (7,7') attached to the machine-frame (2) the trestle by means of joints (5,5';6,6') and not only said joint (4) provided in the middle between the supporting girder (3) of the trestle (1) and the machine-frame (2) but also the joints (5,5') at the ends of the two lateral guiding-rods (7,7'), directed to the trestle (1) and the joints (6,6') at the ends directed to the machine-frames (2) are made of ball joints, characterised in that in respect to the horizontal level the joints (6,6,') of the two lateral guiding-rods (7,7') at the ends directed to the machine-frame (2) are situated above the joints (5,5') at the ends directed to the trestle (1), said joints (5,5') beeing adjusted to a linking-shaft (29) supported by a crank-arm (33) to which it is torsion-fixed adjusted, said crank-arm (33) is struted to the supporting girder (3) arranged in the middle by an intermediate longitudinal variable energy-accumulator (34), and the two lateral guiding rods (7,7') being terminated in their down moving action by stops (13,13') adjusted torsion-fixed to the linking-shaft (29).

2. Harvesting machine , characterised in that the stops (13,13') are disposed at stopping-levers (14,14') arranged to the linking shaft (29) at the both sides beneath the lateral guiding-rods (7,7').

3. Harvesting machine , characterised in that the stopping-levers (14,14') are adjustable in their position to the lateral guiding-rods (7,7'), preferably by adjustement of the crank-arm (33) in respect to the crank-shaft (29) or by adjustment of the energy-accumulator (34) in respect to the crank-arm (33) or by adjustment of the stopping-lever (14,14') in respect to the crank-shaft (29).

4. Harvesting machine , characterised in thatthe touch-points of the lateral guiding-rods (7,7') at the stops (13,13') are with damping elements (32,32').

5. Harvesting machine , characterised in that the longitudinal variable energy-accumulator (34) is formed by a pressure-spring, which is yoked between abutments (35,35') at the crank-arm (33) and the front range (36) of the supporting girder (3), said presure-spring being adjustable with initial stress by a spring-spindle (37) and a spring-nut (38) to adopt the harvesting machine to the bottom-screen.

6. Harvesting machine , characterised in that the longitudinal variable energy-accumulator (34) consists of a hydraulic zylinder and an pressure-accumulator attached to it, which is loaded when the hydraulic zylinder is compressed.

7. Harvesting machine , characterised in that the supporting girder (3) of the trestle (1) proceeds to the front thereof and ends in a bracket (19) directed to the bottom ending in vertical direction at the level of the machine-frame (2), said bracket (19) supporting the ball joint (4) situated in the middle and linked articulating to the machine-frame (2) by means of a bearing-bracket (23), attached to the machine-frame (2).

8. Harvesting machine , characterised in that the joints (6,6') of the lateral guiding-rods (7,7') at the ends directed to the machine-frame (2) are mounted between beams (10,10'and 11,11') of the machine-frame (2) extending upward at the side of the machine-frame (2) being averted of the direction of ride (20) and attached thereof in the lateral ranges (12,12') to the machine-frame (2).

9. Harvesting machine , characterised in that the bearing-bracket (23) of the joint (4) situated in the middle is formed as support for an input-transmission-gear (24).

## Revendications

1. Machine de récolte agricole, en particulier une faucheuse rotative, avec un châssis portant (1) pour le montage au mécanisme de levage à trois bielles frontal d 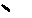 un tracteur et munie d'un bras supportant (3) disposé relatif au châssis de machine (2) au milieu à ce bras portant étant suspendu oscillant latéral le châssis de machine (2) à l'aide d'une articulation et étant tenu de deux bielles disposés latérales de ce que entre le châssis de machine (2) et le châssis portant (1) à des articulations, et non seulement l'articulation au milieu (4) entre le bras supportant (3) du châssis portant (1) et le châssis de machine (2), mais encore les articulations (5,5') à côté de châssis portant (1), les articulations (6,6') à côtè de châssis de machine (2) des deux bielles laterales (7,7') sont formèes des articulations sphèriques (6,6'), caractèrisée en ce que en position de travaille de la machine de récolte agricole les articulations (6,6') à côtè de châssis de machine (2) sont positionèes plus haut relatives à la horizontale que les articulations à côté de châssis portant (1) des bielles latérales (7,7'), ces articulations à côté de châssis portant (1) étants coussinées à un arbre (29) réliant ces que, qui est supporté sur le bras supportant(3) de châssis portant (1) au moyen d'un bras de manivelle (33) attaché fixé contre-torsion et au moyen d'un amortisseur à longueur variable (34) et les deux bielles laterales (7,7') sont terminée en mouvement au dessous par des butées (13,13'), qui sont attachées fixé contre torsion à l'arbre réliant.

2. Machine de récolte agricole selon la revandication 1, caractérisée en ce que les butées (13,13') sont fixées aux bras de butées (14,14'), qui sont disposées á l'arbre réliant (29) à les deux côtés sous les bielles latérales (7,7').

3. Machine de récolte agricole selon la revandication 1, caractérisée en ce que les bras de butées (14,14') sont ajustable á leur position aux bielles latérales, de préférance par réglage de position du bras de manivelle (33) á l'arbre réliant ou par changement de la positions d'amortisseur (34) au bras de manivelle (33) ou par réglage de la positions des bras de butée (14,14') á l'arbre réliant (29).

4. Machine de récolte agricole selon la revandication 1, caractérisée en ce que, les lieux des bielles latérales (7,7') á les butées (13,13') sont munies des éléments d'amortissage (32,32').

5. Machine de récolte agricole selon la revandication 1, caractérisée en ce que l'amortisseur de longueur variable (34) est un ressort, qui est serré entre pièdroits (35,35') au bras de manivelle (33) et la zone (36) de devant du bras supportant (3) et dont leurs prétension pour l'adaption de la machine de récolte agricole est adjustable par un écrou de ressort (38) á un pivot de ressort (37).

6. Machine de récolte agricole selon la revandication 1, caractérisée en ce que l'amortisseur de longueur variable (34) est un vérin hydraulique avec un accumulateur de pression, qui se charge, quand le vérin est comprimé.

7. Machine de récolte agricole selon la revandication 1, caractérisée en ce que le bras supportant (3) du châssis portant (1) est terminé en haunteur du châssis de machine de récolte agricole s'éntendant de devant en un support (19) montant au dessous.

8. Machine de récolte agricole selon la revandication 1, caractérisée en ce que les articulations (6,6') á coté de chassis de machine de recolte agricole des bielles latérales (7,7') sont coussinées entre des bras (10,10' et 11,11') du châssis de machine (2) attachés á la côté du châssis de machine (2) detournée de la direction de marche (20) et ces bras (10,10'; 11,11') étant fixés du châssis de machine (2) á des zones latérales (12,12').

9. Machine de récolte agricole selon la revandication 1, caractérisée en ce que la console de coussinet (23) de l'articulation (24) au milieu est simultanément formée comme l'appui allongé d'un engrenage d'entré (24).
